Europäisches Patentamt

European Patent Office

Office européen des brevets

(19)

(11) Veröffentlichungsnummer: **0 243 537 B1**

(12) **EUROPÄISCHE PATENTSCHRIFT**

(45) Veröffentlichungstag der Patentschrift: **17.07.91**

(51) Int. Cl.⁵: **B23Q 3/155**

(21) Anmeldenummer: **86116544.7**

(22) Anmeldetag: **28.11.86**

(54) **Werkzeugmagazin.**

(30) Priorität: **18.04.86 DE 3613206**

(43) Veröffentlichungstag der Anmeldung:
**04.11.87 Patentblatt 87/45**

(45) Bekanntmachung des Hinweises auf die
Patenterteilung:
**17.07.91 Patentblatt 91/29**

(84) Benannte Vertragsstaaten:
**CH DE FR GB IT LI**

(56) Entgegenhaltungen:
**DE-A- 3 505 138**
**FR-A- 2 531 361**

**PATENT ABSTRACTS OF JAPAN, Band 5, No.
193 (M-101)[865], 9. Dezember 1981**

**PATENT ABSTRACTS OF JAPAN, Band 2, Nr.
47 (M-14), 29. März 1978**

**PATENT ABSTRACTS OF JAPAN, Band 2, Nr.
47 (M-14), 29. März 1978**

**PATENT ABSTRACTS OF JAPAN, Band 9, Nr.
311 (M-436)[2034], 7. Dezember 1985**

**PATENT ABSTRACTS OF JAPAN, Band 5, Nr.**

**135 (M-85)[807], 27. August 1981**

**PATENT ABSTRACTS OF JAPAN, Band 5, Nr.
14 (M-52)[686], 28. Januar 1981**

(73) Patentinhaber: **MAHO Aktiengesellschaft
Postfach 1280 Tiroler Strasse 85
W-8962 Pfronten(DE)**

(72) Erfinder: **Babel, Werner
Achweg 19
W-8962 Pfronten-Meilingen(DE)**

(74) Vertreter: **Patentanwälte Beetz sen. - Beetz
jun. Timpe - Siegfried - Schmitt-Fumian
Steinsdorfstrasse 10
W-8000 München 22(DE)**

## Beschreibung

Die Erfindung betrifft ein Werkzeugmagazin der im Oberbegriff des Patentanspruchs 1 angegebenen Gattung.

Mit der Entwicklung von sog. Bearbeitungszentren und von flexiblen Fertigungssystemen wachsen naturgemäß die Anforderungen an die Werkzeugwechselsysteme, die einen vollautomatischen Ablauf der aus einer Vielzahl von unterschiedlichen Vorgängen bestehenden Werkstückbearbeitung erst ermöglichen. Der vollautomatische Langzeitbetrieb eines programmgesteuerten Bearbeitungszentrums findet seine Grenze u.a. in den maximalen Standzeiten der eingesetzten Werkzeuge. Daneben besteht in der Regel das Problem, daß bestimmte Werkzeuge bei der Bearbeitung eines Werkstücks häufiger und/oder länger eingesetzt werden als andere, so daß sie auch früher verschleißen. Diese Werkzeuge müssen dann im Werkzeugmagazin gegen neue ersetzt werden, was bei herkömmlichen Teller- oder Kettenmagazinen relativ häufige Eingriffe in den Bearbeitungsablauf bedeutet, da das Besetzen des jeweiligen Magazins mit Werkzeugen in der Regel bei stillstehender Maschine manuell vorgenommen werden muß. Besondere Anforderungen an Werkzeugwechselsysteme ergeben sich schließlich bei den in neuerer Zeit konzipierten Mehrspindelautomaten, in denen jeweils mehrere gleichartige Werkstücke gleichzeitig bearbeitet werden. Bei diesen Automaten versorgt in der Regel ein Werkzeugmagazin mindestens zwei Bearbeitungsspindeln jeweils mit gleichen Werkzeugen, die dann auch in einer entsprechend großen Anzahl im Magazin gespeichert sein müssen.

Den vorstehend kurz angerissenen Problemen wurde bisher durch eine Vergrößerung der Speicherkapazität der Werkzeugmagazine begegnet. In dieser Richtung sind jedoch Grenzen gesetzt, weil mit einer Vergrößerung des Magazins auch dessen Platzbedarf und Gewicht in mindestens gleichem Maße ansteigen sowie auch die Hilfsaggregate, wie Lagerungen und Antriebe, entsprechend größer ausgelegt werden müssen. Daraus ergeben sich erhebliche Schwierigkeiten hinsichtlich der Positionierung der jeweiligen Magazine an der Werkzeugmaschine sowie der Auslegung und Anordnung der Werkzeugwechsler. Darüber hinaus vergrößern sich mit der Speicherkapazität der Magazine auch die Wechselzeiten insgesamt, weil sich die Transportwege der einzelnen Werkzeuge im Magazin zur definierten Wechselposition statistisch verlängern, was die Bearbeitungsleistung der gesamten Maschine nachteilig beeinflußt.

Aus der JP-A-56 114 640 ist ein Werkzeugmagazin bekannt, dessen tellerförmiger Werkzeugträger in zwei halbkreisförmige Segmente unterteilt ist. Durch Kupplungsvorrichtungen können die beiden Tellerhälften auf einer gemeinsamen Tragkonstruktion zum fertigen Magazinteller zusammengebaut werden. Jede Tellerhälfte kann gesondert mit Hilfe einer neben dem Magazin angeordneten Vorrichtung sowie Linearführungen auf der Tragkonstruktion aus- und eingebaut werden. Da der Magazinteller nur in zwei auswechselbare Segmente unterteilt ist, kann ein gezielter Wechsel von bestimmten Werkzeuggruppen nicht erfolgen, was in der Praxis bedeutet, daß die an sich noch betriebsfähigen Werkzeuge in der auszuwechselnden Tellerhälfte auch bei der neu einzuwechselnden Tellerhälfte vorhanden sein müssen, wodurch sich die Anzahl der jeweils benötigten Werkzeuge vergrößert. Insbesondere bei großen Werkzeugmagazinen können sich Schwierigkeiten beim Transport der voluminösen Tellerhälften ergeben.

Aufgabe der Erfindung ist es, ein Werkzeugmagazin für programmgesteuerte Werkzeugmaschinen zu schaffen, dessen Speicherkapazität an die Bearbeitungs- und Einsatzbedingungen angepaßt werden kann und das eine verbesserte Auslastung der Werkzeugmaschine ermöglicht.

Diese Aufgabe wird erfindungsgemäß durch die kennzeichnenden Merkmale des Patentanspruchs 1 gelöst.

Die Unterteilung des Werkzeugträgers, z.B. der Kette od. dgl. in mehrere Segmente oder Einzelabschnitte und deren auswechselbare Anordnung im Magazin eröffnet eine Vielzahl von vorteilhaften betriebstechnischen Möglichkeiten. So können beispielsweise die bei der Bearbeitung eines einzelnen Werkstücks besonders häufig eingesetzten und hoch beanspruchten Werkzeuge in einem bzw. bestimmten Segmenten zusammengefaßt und durch Austausch dieser Segmente als Ganzes automatisch ersetzt werden, was die Rüstzeiten entsprechend vermindert. Daneben ist es für den Langzeitbetrieb (Geisterschichten) einer in ein flexibles Fertigungssystem integrierten Werkzeugmaschine möglich, die zur Bearbeitung eines Werkstücktyps notwendigen Werkzeuge in einem oder mehreren bestimmten Segmenten und die für weitere Werkstücktypen benötigten Werkzeuge in anderen bestimmten Magazin-Segmenten zusammenzustellen. Entsprechendes gilt auch für Mehrspindelautomaten, bei denen die Werkzeuge für die Einzelspindeln ebenfalls gruppenweise austauschbar im Magazin angeordnet werden können.

Das erfindungsgemäße technische Konzept ist in geeigneter konstruktiver Anpassung bei unterschiedlichen Magazintypen anwendbar. Bei Kettenmagazinen kann die Kette aus lösbar miteinander gekuppelten Einzelgliedern oder auch aus Kettenabschnitten von vorgegebener Länge zusammengesetzt sein. Eine z.B. im rückwärtigen Teil der Kettenumlaufbahn angeordnete Einrichtung löst die vorher ausgewählten Kettenglieder und/oder die Kettenabschnitte aus dem Kettenverband und ersetzt diese automatisch durch zuvor mit neuen Werkzeugen bestückte Kettenabschnitte.

Einer der wesentlichen Vorteile des erfindungsgemäßen Konzepts liegt noch darin, daß die Magazin-Segmente bzw. -Abschnitte in der Werkstatt vorbereitet und unmittelbar an der Werkzeugmaschine bereitgestellt werden können, so daß sie bei Bedarf entsprechend dem jeweiligen Steuerprogramm automatisch gegen die mit "verbrauchten" Werkzeugen bestückten Magazin-Segmente ausgetauscht werden können. Die Anzahl an notwendigen Eingriffen in den Bearbeitungsablauf der Werkzeugmaschine wird dadurch wesentlich reduziert und somit auch deren Leistung vergrößert. Weiterhin kann auch der Automatisierungsgrad von komplexen Fertigungssystemen auf relativ einfache Weise gesteigert werden, weil die fertig vorbereiteten Magazin-Segmente z.B. auf selbstfahrenden Flurförderern in ihre Bereitstellungen automatisiert gefördert werden können.

Das erfindungsgemäße Konzept sowie zweckmäßige Weiterbildungen und Ausgestaltungen der Erfindung ergeben sich aus den Unteransprüchen, der Zeichnung und der folgenden Beschreibung von Ausführungsbeispielen.

Es zeigen:

Fig. 1    als erstes Ausführungsbeispiel der Erfindung ein Tellermagazin in schematischer Draufsicht;

Fig. 2    ein weiteres Ausführungsbeispiel der Erfindung in Form eines Kettenmagazins mit einer Vorrichtung für den Wechsel von Kettenabschnitten in schematischer Draufsicht;

Fig. 3    einen Schnitt durch ein Kettengelenk in der Schnittebene III-III der Fig. 4;

Fig. 4    einen Längsschnitt durch ein Kettengelenk in der Schnittebene IV-IV in Fig. 2;

Fig. 5    einen Längsschnitt durch ein Kettengelenk in der Schnittebene V-V in Fig. 2;

Fig. 6    eine Draufsicht auf ein Kettengelenk mit dem Druckmittelzylinder zum Verdrehen des Gelenkbolzens;

Fig. 7    eine weitere Ausführung der Erfindung in schematischer Draufsicht.

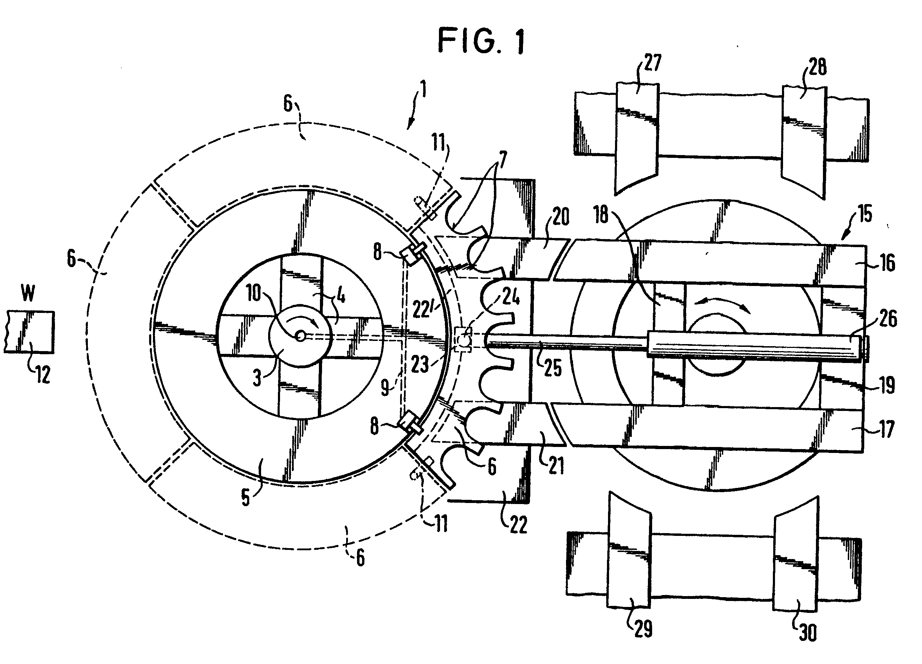

Bei der Ausführung nach Fig. 1 ist ein Tellermagazin 1 z. B. auf einem nicht dargestellten Spindelstock montiert. Der Magazinteller besteht aus einem an einer zentralen Säule 3 befestigten Tragkreuz 4, aus einem formsteifen Tragring 5, der an den Enden der Tragkreuz-Streben starr befestigt ist, und aus vier Ringsegmenten 6, die im zusammengebauten Zustand den ringförmigen Werkzeugträger bilden und an ihrem Außenrand jeweils mehrere Werkzeugaufnahmen 7 mit Klemm- oder Rasthalterungen für die Werkzeugkegel aufweisen. Jedes der vier Ringsegmente 6 kann einzeln aus dem Magazin aus- und eingebaut werden. In dem in Fig. 1 dargestellten eingebauten Zustand sind Verriegelungselemente 8 zwischen dem Tragring 5 und jedem der Segmente wirksam, die z. B. in Form von im Werkzeugmaschinenbau geläufigen Klemmbolzen ausgebildet sein können, deren hydraulische Zylinder im Tragring 5 eingebaut sind und über Kanäle 9 mit in der Säule 3 verlegten Drucköilkanälen 10 in Verbindung stehen. Statt der Klemmbolzen können auch andere Befestigungselemente zur Fixierung der Ringsegmente am Tragring sowie auch untereinander verwendet werden, die mechanisch, hydraulisch, pneumatisch oder auch elektrisch betätigbar sind und eine ausreichend formsteife und schwingungsfreie Halterung der Ringsegmente am Tragring bzw. untereinander gewährleisten. In Fig. 1 sind schwenkbare Riegel 11 zur gegenseitigen Abstützung und zusätzlichen Halterung von jeweils zwei benachbarten Ringsegmenten strichpunktiert angedeutet.

Zum Wechseln der Werkzeuge wird der Magazinteller mittels eines nicht dargestellten Antriebsmotors so weit verdreht, bis das ausgewählte Werkzeug bzw. eine Leerstelle in der Wechselposition W dem Werkzeugwechsler 12 gegenüberliegt. Insoweit entspricht die Funktion und Arbeitsweise des Tellermagazins den üblichen Ausführungen.

Als Übergabevorrichtung für die einzelnen Segmente dient bei der dargestellten Ausführung ein Drehtisch 15, auf dem zwei Führungsschienen 16, 17 parallel nebeneinander montiert und gegenseitig durch Querstreben 18, 19 versteift sind. Der Drehtisch 15 ist in beiden Drehrichtungen um mindestens 180° mittels eines - nicht dargestellten - Antriebes verdrehbar. Die beiden Führungsschienen 16, 17 fluchten mit ortsfesten Schienenabschnitten 20, 21, die z.B. auf der Tragkonstruktion 22 des Magazintellers 5, z.B. auf einem Teil des Spindelstocks fest montiert sind. Diese Führungsschienen-Abschnitte 20, 21 erstrecken sich bis unter den Rand des Magazintellers bzw. des Ringsegments 6. An seinem radial inneren Rand weist dieses Ringsegment 6 einen sich nach unten erstreckenden ringsegmentförmigen Ansatz 22' auf, der in Fig. 1 gestrichelt dargestellt ist. In diesem Ringansatz 22' ist zentral eine Öffnung 23 für den Eingriff eines Rasthakens oder Riegels 24 am Ende einer Kolbenstange 25 vorgesehen. Die Kolbenstange 25 ist Teil einer hydraulischen Druckzylindereinheit 26, die auf dem Drehtisch 15 montiert ist und über nicht dargestellte Leitungen mit Drucköl beaufschlagt wird.

Zu beiden Seiten des Drehtisches 15 endet je ein Paar von ortsfest montierten Führungsschienen 27, 28 bzw. 29, 30. Diese Führungsschienen 27 bis 30 sind so angeordnet und ausgebildet, daß sie mit den beiden Führungsschienen 16, 17 des Drehtisches 15 fluchten, wenn dieser aus seiner dargestellten Position um 90° in der einen oder anderen Richtung verdraht wird.

Zum Ausbau eines Ringsegments 6 aus der in Fig. 1 dargestellten Position wird der Kolben 25 der Zylindereinheit 26 so weit ausgefahren, bis der Haken 24 an seinem freien Ende in die Ausnehmung 23 eingreift und dort durch geeignete Mittel, z.B. durch eine Federklemmung, fixiert wird. Gleichzeitig werden die Klemmpatronen 8 mit Drucköl über die Leitung 9 beaufschlagt und dadurch gelöst. Durch anschließendes Einfahren des Kolbens 25 wird das nunmehr freigegebene Segment 6 auf eine - in Fig. 1 nicht dargestellte - Palette gezogen und zusammen mit dieser auf den Schienen 20, 21 bis auf den Drehtisch 15 gebracht. Durch anschließendes Verdrehen des Drehtisches 15 bis zur Flucht mit dem Schienenpaar 27, 28 bzw. 29, 30 und anschließendes Ausfahren der Kolbenstange 25 wird das - die verbrauchten Werkzeuge enthaltende - Magazin-Segment 6 in eine Abstellposition gebracht. Nach Einfahren des Zylinders 25 und einer Verdrehung um 180° kann ein auf einer Palette angeordnetes neues Segment 6 erfaßt und vom Kolben 25 auf die Schienen 16, 17 des Drehtisches 15 gebracht werden. Nach einer Rückdrehung des Drehtisches um 90° befinden sich seine Führungsschienen 16, 17 wieder in Flucht mit den Schienenabschnitten 20, 21, so daß das neue Segment in seine Betriebslage gebracht und durch Betätigen der Klemmbolzen 8 am Tragring 5 befestigt werden kann. Nach Lösen des Hakens 24 und Einziehen der Kolbenstange 25 ist der Wechselvorgang abgeschlossen.

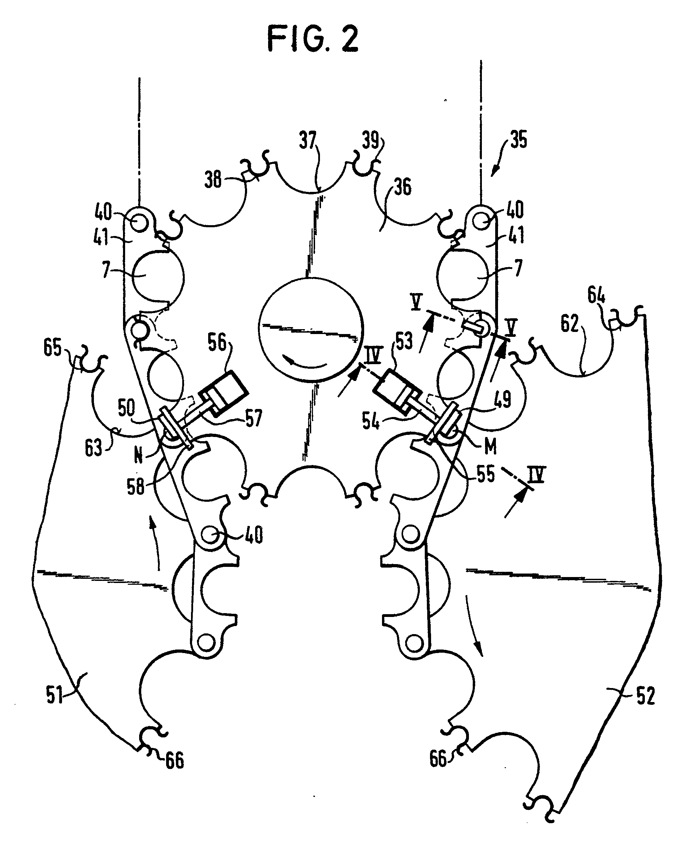

Bei der in Fig. 2 dargestellten Ausführung handelt es sich um ein Kettenmagazin, bei dem eine die Werkzeugaufnahmen enthaltende Endloskette 35 über mehrere Kettenräder 36 läuft, von denen nur eines dargestellt ist. Durch programmgesteuerten Antrieb mindestens eines der Kettenräder 36 gelangen die ausgewählten Werkzeugaufnahmen 7 in die Wechselposition. Die die Werkzeugaufnahmen 7 enthaltende Endloskette 35 ist aus mehreren Kettenabschnitten zusammengesetzt, die durch speziell ausgebildete Gelenkbolzen lösbar miteinander verbunden sind. Jedes Kettenrad 36 weist an seinem Außenumfang halbkreisförmige Ausschnitte 37 und in den von diesen Ausschnitten 37 begrenzten Zwischenstegen halbrunde Ausnehmungen 38 auf, in denen Federzangen 39 sitzen. Diese Federzangen 39 dienen als Fixierelemente für die die Kettenglieder 41 verbindenden Gelenkbolzen 40.

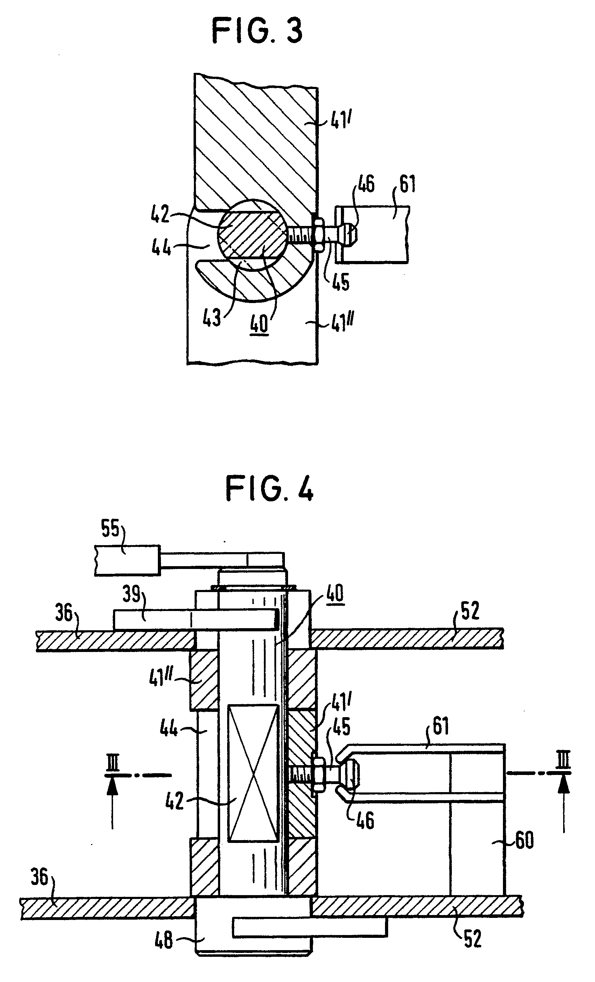

Wie aus den Fig. 3 bis 6 ersichtlich, ist jeder Gelenkbolzen 40 in seinem mittleren Abschnitt 42 beidseitig abgeflacht. Jedes Kettenglied 41 weist im Bereich seines einen Gelenkauges 43 einen radialen Ausschnitt 44 quer zur Gliedlängsachse auf, dessen Breite geringfügig größer als der Durchmesser des Bolzenschaftes im abgeflachten Abschnitt 42 ist. Dem Ausschnitt 44 diametral gegenüberliegend ist im Kettenglied 41' (Fig. 3, 4) ein Zapfen 45 befestigt, der quer zur Gliedlängsachse ausgerichtet ist und an seinem freien Ende einen verdickten Kopf 46 aufweist.

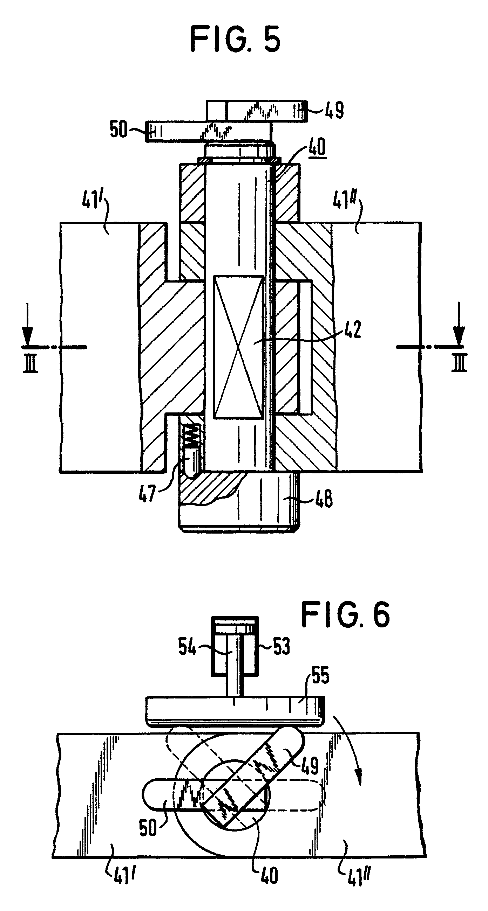

Wie aus Fig. 5 ersichtlich, ist eine Verdrehsicherung für den Gelenkbolzen 40 in Form eines federbelasteten Stiftes 47 an einem Ende jedes Kettengliedes 41" vorgesehen, der mit seinem balligen Ende in mindestens eine Einsenkung in der Innenfläche des einen Gelenkbolzenkopfes 48 federnd eingreift. Am anderen Ende des Gelenkbolzens 40 sind zwei Querstifte 49, 50 unter einem gegenseitigen stumpfen Winkel quer zur Bolzenlängsachse befestigt (vgl. Fig. 5 und 6).

Wie aus Fig. 2 ersichtlich, befinden sich unmittelbar neben dem Kettenrad 36 zwei weitere Kettenräder 51, 52, von denen das in Fig. 2 linke Kettenrad einen neuen und in die Endloskette einzubauenden Kettenabschnitt trägt und das in Fig. 2 rechte Kettenrad zum Abführen eines aus der Endloskette auszubauenden Kettenabschnittes dient. An der Stelle M ist ein als Druckmittelzylinder 53 ausgebildeter Linearmotor radial zum Kettenrad 36 ortsfest angeordnet, an dessen Kolbenstange 54 ein Schieber 55 befestigt ist. Dieser auch in Fig. 6 dargestellte Linearantrieb 53 wirkt auf den am freien Ende des jeweiligen Gelenkbolzens 40 befestigten Querstift 49, um den Gelenkbolzen 40 um seine Längsachse zu verdrehen. Ein weiterer gleichartiger Linearantrieb 56 ist radial zum Kettenrad 36 ortsfest an der Stelle N in Fig. 2 angeordnet, an dessen Kolbenstange 57 ebenfalls ein Schieber 58 befestigt ist, welcher an dem Querstift 50 des Gelenkbolzens 40 angreift und letzteren um seine Längsachse im Gegensinn verdreht.

Wie aus Fig. 4 ersichtlich, besteht jedes Kettenrad 36, 51, 52 aus zwei gleichgeformten Platten bzw. Scheiben, die in einem der Kettengliedhöhe entsprechenden axialen Abstand zueinander angeordnet und auf Wellen befestigt sind. Zwischen den beiden Platten der Kettenräder 36 und 52 sind auf Sockeln 60 Zangen 61 befestigt (vgl. Fig. 4), welche die verdickten Köpfe 46 der Querzapfen 45 umgreifen. Darüber hinaus weist jedes Kettenrad 51, 52 in jeder Platte am Außenumfang halbkreisförmige Ausschnitte 62, 63 sowie halbrunde Ausnehmungen 64, 65 mit darin festgelegten Federzangen 66 auf, welche den Elementen 37 bis 39 des Kettenrades 36 hinsichtlich Wirkungsweise und Formgebung entsprechen.

Die vorstehend beschriebene und in Fig. 2 bis 6 dargestellte Ausführung arbeitet wie folgt: Wenn ein aus einem oder mehreren Kettengliedern bestehender Kettenabschnitt des Kettenmagazins mit den entsprechenden Werkzeugen ausgewechselt werden soll, wird die Endloskette in eine in der rechten Seite der Fig. 2 dargestellte und mit M bezeichnete Position gefahren, in welcher der den auszuwechselnden Kettenabschnitt mit der verbleibenden Kette verbindende Gelenkbolzen dem Linearmotor 53 genau gegenübersteht. Durch Betätigen dieses Linearmotors 53 und Ausfahren dessen Kolbens 54 drückt der an dem freien Ende des Kolbens 54 quer befestigte Schieber 55 den am Kopfende befestigten Querstift 49 aus der in Fig. 6 in Vollinien dargestellten Schrägstellung in die strichpunktiert dargestellte Parallelstellung. Dabei verdreht sich der Gelenkbolzen 40 um einen vorgegebenen Betrag, so daß die beiden ebenen Seitenflächen seines abgeflachten mittleren Schaftabschnittes 42 parallel zu den Begrenzungsflächen des radialen Ausschnittes ausgerichtet sind, wie dies in Fig. 3 dargestellt ist. Gleichzeitig ergreift die am Kettenrad 52 befestigte Zange 61 den verdickten Kopf 46 des vorstehenden Zapfens 45 (Fig. 3, 4). Durch eine synchrone Verdrehung der beiden Kettenräder 36 und 52 hält die den verdickten Kopf 46 hintergreifende Zange 61 das ankommende Kettenglied 41′ am Außenumfang des Kettenrades 52, wobei gleichzeitig der Gelenkbolzen 42 aus dem radialen Ausschnitt 44 des Kettengliedes 41 herausgleitet. Der Bolzen 42 und damit auch das Ende der verbleibenden Endloskette wird durch die teilweise umgreifende Federzange 39 in der halbrunden Ausnehmung 38 des Kettenrades 36 festgehalten, so daß der Endabschnitt der verbleibenden Endloskette am Kettenrad 36 nach wie vor sicher geführt wird. Der mit dem Kettenglied 41′ gemäß Fig. 3 beginnende auszuwechselnde Kettenabschnitt gelangt durch eine synchrone Weiterdrehung der beiden Kettenräder 36 und 52 auf das Kettenrad 52 und wird von dieser übernommen. Das Lösen des letzten Kettengliedes dieses auszuwechselnden Kettenabschnittes erfolgt in gleicher Weise durch Anhalten der Kette in der Position M und Verdrehen des jeweiligen Gelenkbolzens durch Betätigen des Linearantriebes 53, 54, 55.

Die Zuführung ebenso wie das Anschließen eines neuen einzuwechselnden Kettenabschnittes erfolgt mit Hilfe des in Fig. 2 linken Kettenrades 51, auf dessen Umfang der einzuwechselnde Kettenabschnitt durch die die Kettenbolzen 40 umgreifenden Federzangen 65 gehalten wird. Wenn das letzte Glied der Endloskette und synchron das erste Glied des einzuwechselnden Kettenabschnittes die Position N erreichen, erfolgt ein automatisches Eingreifen des in der Stellung nach Fig. 3 befindlichen Gelenkbolzens in den radialen Ausschnitt 44 des ersten Gliedes des ankommenden Kettenabschnitts. Durch Betätigen des Linearmotors 56 und Verschieben seines Kolbens 57 und seines Schiebers 58 drückt dieser Schieber 58 gegen den zweiten Querstift 50 am freien Ende des Gelenkbolzens 40 (Fig. 5), der dadurch in die in Fig. 6 mit Vollinien dargestellte parallele Lage gelangt und den Gelenkbolzen 40 so weit verdreht, daß sein abgeflachter Schaftabschnitt 42 nicht mehr durch die radiale Ausnehmung 44 des Kettengliedes hindurchtreten kann. Damit ist der einzuwechselnde Kettenabschnitt an das letzte Glied der Endloskette angeschlossen. Ein entsprechender Vorgang wiederholt sich zwischen dem letzten Glied des einzuwechselnden Kettenabschnittes und dem ersten Glied der Endloskette.

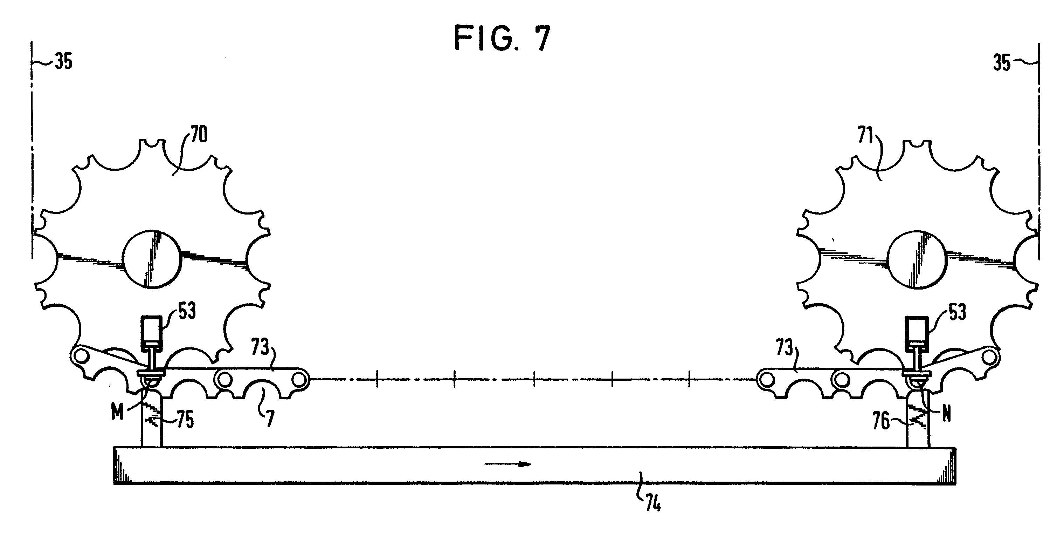

Bei der in Fig. 7 dargestellten Ausführung kann ein bestimmter Kettenabschnitt, dessen Länge dem Achsabstand der beiden Kettenräder 70, 71 entspricht, gleichzeitig ausgewechselt werden. Die Konstruktion und Funktion der beiden Kettenräder 70, 71 entspricht der des Kettenrades 36 in Fig. 2. Zum gleichzeitigen Lösen der in den Positionen M und N befindlichen Kettenbolzen dienen zwei Linearantriebe 53 gleicher Konstruktion wie der Linearantrieb 53 in Fig. 2. Der aus der Endloskette 35 gelöste Kettenabschnitt 73 wird von einer Halterung 74 übernommen, die Querstege 75, 76 mit entsprechenden Aufnahmehalterungen aufweist und auf einem selbstfahrenden Wagen od. dgl. montiert sein kann. Die Übergabe- und Wechseloperationen entsprechen im wesentlichen denen des Ausführungsbeispiels nach Fig. 2 bis 6.

Die Erfindung ist nicht auf die dargestellten Ausführungsbeispiele beschränkt. So können beispielsweise die in den Fig. 1 und 2 dargestellten Maßnahmen in der Weise miteinander kombiniert werden, daß am Außenumfang des Magazintellers eine Endloskette mit Werkzeugaufnahmen montiert wird, deren einzelne Abschnitte dann in einer geeigneten Weise entsprechend der Ausführung nach Fig. 2 ausgewechselt werden.

**Patentansprüche**

1. Werkzeugmagazin für programmgesteuerte Werkzeugmaschinen, bestehend aus einer Tragkonstruktion für einen die Werkzeugaufnahmen (7) enthaltenden Träger, der in mehrere austauschbare Segmente unterteilt ist, aus einem programmgesteuerten elektrischen Antrieb für die Bewegungen des Trägers mit den Werkzeugaufnahmen (7) in vorbestimmte Wechselpositionen, und aus einer Übergabeeinrichtung (53, 56, 51, 52) für den Ein- und Ausbau der Segmente in und aus dem Träger,

**dadurch gekennzeichnet,**

daß der Träger eine aus mehreren lösbar aneinander gekoppelten Abschnitten bestehende Endloskette (35) ist, und

daß die Übergabeeinrichtung (53, 56, 51, 52) mindestens eine Kuppelvorrichtung (53, 56) zum automatischen An- und Abkoppeln vorgewählter Kettenabschnitte enthält.

2. Werkzeugmagazin nach Anspruch 1,
   dadurch gekennzeichnet,
   daß in den Gelenkaugen (43) der Kettenglieder (41') radiale Ausschnitte (44) ausgebildet sind und daß die abgeflachte Schäfte (42) aufweisenden Gelenkbolzen (40) durch eine Kuppelvorrichtung (53, 56) verdrehbar in den Gelenkaugen (43) aufgenommen sind.

3. Werkzeugmagazin nach Anspruch 1 oder 2,
   dadurch gekennzeichnet,
   daß im Bereich eines Magazin-Kettenrades (36) weitere Kettenräder (51, 52) mit Fixiergliedern (65, 66) zum Zu- bzw. Abführen der in die Endloskette (35) einzubauenden bzw. aus ihr gelösten Kettenabschnitte angeordnet sind.

4. Werkzeugmagazin nach Anspruch 3,
   dadurch gekennzeichnet,
   daß die Kuppelvorrichtung dem Magazin-Kettenrad (36) zugeordnete Linearantriebe (53, 56) enthält, deren Stößel (54, 57) auf Querstifte (49, 50) an den Gelenkbolzen (40) einwirken und diese in den Gelenkaugen (43) der Kettenglieder (41', 42') verdrehen.

5. Werkzeugmagazin nach Anspruch 4,
   dadurch gekennzeichnet,
   daß am Außenumfang der Kettenräder in halbrunden Ausschnitten (38, 64, 65) Federzangen (39; 66) ausgebildet sind, in welche die Gelenkbolzen (40) einschnappen.

6. Werkzeugmagazin nach einem der Ansprüche 1 bis 5,
   dadurch gekennzeichnet,
   daß an mindestens einem Endteil jedes Kettengliedes (41') ein Querzapfen (45) diametral gegenüberliegend zum radialen Ausschnitt (44) angeordnet ist und daß an einem neben dem Magazin-Kettenrad (36) befindlichen Ablauf-Kettenrad (52) Zangen (61) montiert sind, welche die verdickten Köpfe (46) der Querzapfen (45) umgreifen.

7. Werkzeugmagazin nach einem der vorhergehenden Ansprüche,
   dadurch gekennzeichnet,
   daß eine Vorrichtung (74) zum gleichzeitigen Ein- oder Auskuppeln der endseitigen Gelenkbolzen (40) eines Kettenabschnitts (73) vorgesehen ist.

## Claims

1. A tool magazine for program-controlled machine tools, comprising a support structure for a carrier containing the tool holders (7), such holder being sub-divided into a number of interchangeable segments, a program-controlled electrical drive for the movements of the carrier with the tool holders (7) to predetermined changing positions, and a transfer device (53, 56, 51, 52) for insertion of the segments into and removal from the carrier, characterised in that the carrier is an endless chain (35) consisting of a number of releasably inter-coupled portions, and in that the transfer device (53, 56, 51, 52) contains at least one coupling device (53, 56) for automatically coupling and uncoupling preselected chain portions.

2. A tool magazine according to claim 1, characterised in that radial cut-outs (44) are formed in the shackle toggle joints (43) of the chain links (41') and in that the joint bolts (40), which have flattened stems (42), are so received in the shackle toggle joints (43) as to be pivotable by a coupling device (53, 56).

3. A tool magazine according to claim 1 or 2, characterised in that near a magazine sprocket wheel (36) there are disposed other sprockets wheels (51, 52) with fixing elements (65, 66) for supplying and discharging the chain portions to be inserted into or removed from the endless chain (35).

4. A tool magazine according to claim 3, characterised in that the coupling device contains linear drives (53, 56) which are associated with the magazine sprocket wheel (36) and the push rods (54, 57) of which act on transverse pins (49, 50) at the joint bolts (40) and pivot the same in the shackle toggle joints (43) of the chain links (41', 42').

5. A tool magazine according to claim 4, characterised in that spring clips (39; 66) are formed at the outer periphery of the sprocket wheels in semicircular cut-outs (38, 64, 65), the joint bolts (40) snapping into said spring clips.

6. A tool magazine according to any one of claims 1 to 5, characterised in that a transverse pin (45) is disposed diametrically opposite the radial cut-out (44) at at least one end part of each chain link (41') and in that grippers (61) which engage around the thickened heads (46) of the transverse pins (45) are mounted on a discharge sprocket wheel (52) situated next to the magazine sprocket wheel (36).

7. A tool magazine according to any one of the preceding claims, characterised in that a device (74) is provided for simultaneously coupling or uncoupling the end joint bolts (40) of a chain portion (73).

**Revendications**

1. Magasin d'outils pour machines-outils commandées par programme, se composant d'une structure de support destinée à un support comportant les logements d'outils (7) et subdivisé en plusieurs segments interchangeables, d'un dispositif d'entrainement électrique commandé par programme pour les mouvements de déplacement du support avec les logements d'outils (7) vers des positions d'échange prédéterminées, et d'un dispositif de transfert (53, 56, 51, 52) pour la mise en place des segments sur le support et leur retrait du support, caractérisé en ce que le support est une chaîne sans fin (35) constituée de plusieurs tronçons accouplés entre-eux de manière amovible, et en ce que le dispositif de transfert (53, 56, 51, 52) comporte au moins un dispositif de couplage (53, 56) destiné à accoupler ou désaccoupler automatiquement des tronçons de chaîne présélectionnés.

2. Magasin d'outils selon la revendication 1, caractérisé en ce que des entailles radiales (44) sont réalisées dans les oeils d'articulation (43) des maillons de chaîne (41'), et en ce que les axes d'articulation (40) présentant des tiges (42) à méplats, sont logés dans les oeils d'articulation (43) de manière à pouvoir être tournés par un dispositif de couplage (53, 56).

3. Magasin d'outils selon la revendication 1 ou 2, caractérisé en ce que dans la zone d'une roue à chaîne de magasin (36), sont agencées d'autres roues à chaîne (51, 52) comportant des organes de fixation (65, 66) et destinées respectivement à amener et à évacuer les tronçons de chaîne qui doivent être mis en place dans la chaîne sans fin (35) ou qui en ont été retirés.

4. Magasin d'outils selon la revendication 3, caractérisé en ce que le dispositif de couplage comporte des dispositifs d'entrainement linéaire (53, 56) associés à la roue à chaîne de magasin (36) et dont les poussoirs (54, 57) agissent sur des goupilles transversales (49, 50) des axes d'articulation (40) et produisent la rotation de ces derniers dans les oeils d'articulation (43) des maillons de chaîne (41', 42').

5. Magasin d'outils selon la revendication 4, caractérisé en ce que sur la périphérie extérieure des roues à chaîne, dans des entailles demi-rondes (38, 64, 65), sont formées des pinces à ressort (39, 66) dans lesquelles viennent s'encliqueter les axes d'articulation (40).

6. Magasin d'outils selon l'une des revendications 1 à 5, caractérisé en ce qu'au niveau d'au moins une des parties d'extrémité de chaque maillon de chaîne (41'), est disposé un tenon transversal (45), de manière diamétralement opposée à l'entaille radiale (44), et en ce que sur une roue à chaîne (52) d'évacuation se trouvant à côté de la roue à chaîne de magasin (36), sont montées des pinces (61) qui enserrent les têtes élargies (46) des tenons transversaux (45).

7. Magasin d'outils selon l'une des revendications précédentes, caractérisé en ce qu'il est prévu un dispositif (74) pour l'accouplement ou le désaccouplement simultané des axes d'articulation (40) d'extrémité d'un tronçon de chaîne (73).

FIG. 1

# FIG. 2

## FIG. 3

## FIG. 4

# FIG. 5

# FIG. 6

# FIG. 7

EP 0 243 537 B1